# EUROPÄISCHE PATENTSCHRIFT

(11) **EP 4 551 443 B1**
(45) Veröffentlichungstag und Bekanntmachung des Hinweises auf die Patenterteilung: **27.05.2026**
(21) Anmeldenummer: 23761756.8
(22) Anmeldetag: 08.08.2023
(51) Int. Cl.: B61L 3/00, B61L 15/00, B61L 25/02, B61L 27/40, B60T 17/22, B60T 13/66

(54) **VERFAHREN ZUR GEWÄHRLEISTUNG DES STILLSTANDS EINES SCHIENENFAHRZEUGS**
METHOD FOR ENSURING THE STANDSTILL OF A RAIL VEHICLE
PROCÉDÉ POUR GARANTIR L'IMMOBILITÉ D'UN VÉHICULE FERROVIAIRE

(30) Priorität: 30.08.2022 DE 102022208995
(43) Veröffentlichungstag der Anmeldung: 14.05.2025
(73) Patentinhaber: Siemens Mobility GmbH, 80997 München (DE)
(72) Erfinder: LOHNEIS, Georg, 96250 Ebensfeld (DE); STRÖSSNER, Christian, 91091 Großenseebach (DE)
(74) Vertreter: Siemens Patent Attorneys
(86) Internationale Anmeldenummer: PCT/EP2023/071940
(87) Internationale Veröffentlichungsnummer: WO 2024/046719

(56) Entgegenhaltungen:
- EP-B1- 2 511 146
- DE-A1- 102008 007 940

## Beschreibung

Die Erfindung betrifft ein Verfahren zur Gewährleistung des Stillstands eines Schienenfahrzeugs, insbesondere einer sicherheitsgerichteten Gewährleistung des Stillstands des Schienenfahrzeugs.

Im Betrieb von Schienenfahrzeugen ist sicherzustellen, dass es sich ausschließlich aufgrund eines entsprechenden Fahrbefehls bewegt.

Dieser Fahrbefehl wird durch den Triebfahrzeugführer des Schienenfahrzeugs initiiert, wobei der Fahrbefehl als Funktionalität als hoch sicherheitskritisch eingestuft ist. Grund dafür ist, dass bei einer ungerechtfertigten Bewegung des Schienenfahrzeugs mit einer Personengefährdung gerechnet werden muss.

Der erteilte Fahrbefehl wird im Schienenfahrzeug durch Software der dortigen elektronischen Leittechnik umgesetzt. Entsprechend muss vermieden werden, dass Softwarefehler über die Leittechnik zu einer unberechtigten Bewegung des Schienenfahrzeugs führen. Daher ist auch die den Fahrbefehl umsetzende Leittechnik als hoch sicherheitskritisch eingestuft.

Sowohl Entwicklung als auch Ausführung der Leittechnik samt dazugehöriger Software muss entsprechend "sicherheitsgerichtet" ausgeführt werden. Darunter wird eine Realisierung verstanden,
- bei der sowohl Hardware als auch Firmware nach einer Normenreihe geprüft werden,
- bei der ein Entwicklungszyklus bzw. ein Lebenszyklus mit Verifikationen und Validierungen versehen sind,
- bei der über eine modulare und strukturierte Programmierung ein möglichst einfaches und damit bezüglich Störungen robustes Programm entwickelt und verwendet wird,
- bei der ein funktionaler Test bei Inbetriebnahme und beim Betrieb vorgesehen ist, und/oder
- bei der nach Änderungen geeignete Prüfungsaktivitäten vorgesehen sind,
- etc.

Darüber hinaus wird als zusätzliche Sicherheit davon ausgegangen, dass der Triebfahrzeugführer im Falle einer Störung das Schienenfahrzeug durch Betätigung eines Not-Aus-Schalters oder eines Not-Stopp-Schalters in einen sicheren Stillstand bringt.

Diese Sicherheitsmaßnahme entfällt, sobald der Triebfahrzeugführer das Schienenfahrzeug verlässt. In diesem Fall muss der Triebfahrzeugführer manuell sicherstellen, dass das Schienenfahrzeug "abgerüstet" ist, d.h. dass zumindest eine Hochspannungsausrüstung ausgeschaltet ist.

Für einen geplanten "autonomen Betrieb" des Schienenfahrzeugs, der ohne einen Triebfahrzeugführer durchgeführt wird, ist kein geeignetes Verfahren zur sicherheitsgerichteten Gewährleistung des Stillstands des Schienenfahrzeugs bekannt.

Aus der Druckschrift DE 10 2008 007 940 A1 ist eine Sicherheitsvorrichtung (10) für eine elektrisch gesteuerte Feststellbremse (12) eines Fahrzeugs (14) bekannt. Mit Hilfe eines Steuergeräts wird bei einem abgestellten Fahrzeug mit einer ausgeschalteten Zündung (30) ein Wegrollen detektiert.

Aus der Druckschrift EP 2 511 146 B1 ist eine Vorrichtung mit einem Pneumatikmodul bekannt, das den Luftdruck eines Bremssystems mittels Drucksensoren überwacht. Ein Steuermodul steuert ein oder mehrere Bremssysteme, wobei das Steuermodul Positionsdaten eines Fahrzeugs empfängt. Das Bremssystem besteht aus einer Druckluftbremse und einer Federspeicherbremse. Das Pneumatikmodul umfasst Drucksensoren zur Erfassung des Drucks der Bremssysteme und des Drucks einer Hauptluftleitung.

Es ist Aufgabe der vorliegenden Erfindung, ein Verfahren zur sicherheitsgerichteten Gewährleistung des Stillstands eines Schienenfahrzeugs, das sich in einem autonomen Betrieb befindet, anzugeben.

Diese Aufgabe wird durch die Merkmale des Patentanspruchs 1 gelöst. Vorteilhafte Weiterbildungen sind in den abhängigen Patentansprüchen angegeben.

Beim erfindungsgemäßen Verfahren zur Gewährleistung des Stillstands eines Schienenfahrzeugs verwendet das Schienenfahrzeug eine Fahrzeugsteuerung mit einer elektronischen Leittechnik, um Fahrbefehle und Stillstandbefehle im Schienenfahrzeug umzusetzen.

Zusätzlich wird eine von der Leittechnik unabhängige Überwachungsinstanz verwendet, die eine Bewegung des Schienenfahrzeugs erkennt, die erkannte Bewegung mit einem geltenden Fahrbefehl der Fahrzeugsteuerung vergleicht und im Fall einer Abweichung unabhängig von der Leittechnik (und damit unabhängig vom geltenden Fahrbefehl) eine Bremsung einleitet, um das Schienenfahrzeug zum Stillstand zu bringen.

Alternativ dazu wird im Fall einer Abweichung zusätzlich ein Antrieb des Schienenfahrzeugs deaktiviert, wobei diese Deaktivierung ebenfalls unabhängig von der Leittechnik erfolgt.

In einer vorteilhaften Weiterbildung ist die Fahrzeugsteuerung, die Leittechnik und die Überwachungsinstanz im Schienenfahrzeug realisiert bzw. werden diese im Schienenfahrzeug integriert betrieben.

Erfindungsgemäß wird das Schienenfahrzeug autonom und ohne Einwirkung eines Triebfahrzeugführers betrieben.

Erfindungsgemäß werden die Fahrbefehle und Stillstandbefehle im Schienenfahrzeug von einer landseitigen Betriebsleitzentrale bzw. Betriebskontrollstelle gegeben.

In einer vorteilhaften Weiterbildung übermittelt die landseitige Betriebsleitzentrale den Fahrbefehl an das Schienenfahrzeug über eine sichere Funkverbindung und/oder mit Hilfe einer sicheren Datenübertragung.

In einer vorteilhaften Weiterbildung deaktiviert die Überwachungsinstanz bei einem Fehlen des Fahrbefehls bei gleichzeitig erkannter Bewegung des Schienenfahrzeugs den Antrieb des Schienenfahrzeugs unabhängig von der Leittechnik und leitet ebenfalls unabhängig von der Leittechnik die Bremsung des Schienenfahrzeugs ein.

In einer vorteilhaften Weiterbildung erfolgt zur Durchführung des Stillstands unter Umgehung der elektronischen Leittechnik ein direkter Eingriff in Antriebseinrichtungen und in Bremseinrichtungen des Schienenfahrzeugs.

In einer vorteilhaften Weiterbildung erfolgt zur Durchführung des Stillstands unter Umgehung der elektronischen Leittechnik ein direkter Eingriff in eine Hauptenergieversorgung des Schienenfahrzeugs, um diese abzuschalten.

In einer vorteilhaften Weiterbildung wird eine Information zur erkannten Bewegung zusammen mit einer Positionsangabe des Schienenfahrzeugs an die landseitige Betriebsleitzentrale übertragen.

In einer vorteilhaften Weiterbildung wird die Positionsangabe satellitenbasiert am Schienenfahrzeug ermittelt.

In einer vorteilhaften Weiterbildung leitet die landseitige Betriebsleitzentrale beim Schienenfahrzeug die Antriebsabschaltung und die Bremsung ein, sobald eine ungerechtfertigte Bewegung des Schienenfahrzeugs erkannt wird.

Erfindungsgemäß werden zur Bewegungserkennung Sensoren verwendet, die an zumindest einer Achse des Schienenfahrzeugs angeordnet sind, wobei die Sensoren elektrisch unabhängig von der Fahrzeugleittechnik betrieben werden.

Erfindungsgemäß wird ein Sensor verwendet, der eine sich aufbauende Anzugkraft an einer Drehgestell-Achse des Schienenfahrzeugs erfasst.

In einer bevorzugten Weiterbildung wird das Schienenfahrzeug autonom betrieben, wobei vollautomatisch ein vorgegebener bzw. gespeicherter Fahrplan abgearbeitet wird, auf dem basierend entsprechende geltende Fahrbefehle gebildet werden.

Das erfindungsgemäße Verfahren ermöglicht einen normalen Betrieb eines Schienenfahrzeugs und einen autonomen Betrieb des Schienenfahrzeugs, der ohne Beteiligung eines Triebfahrzeugführers erfolgt.

Das erfindungsgemäße Verfahren erlaubt den Verzicht einer Überwachung des Stillstands eines abgerüsteten Schienenfahrzeugs.

Das erfindungsgemäße Verfahren ist ohne Beteiligung von streckenseitiger Ausrüstung durchführbar.

Das erfindungsgemäße Verfahren ist mit geringem Aufwand in ein Schienenfahrzeug integrierbar. Bereits im Betrieb befindliche Schienenfahrzeuge sind einfach umrüstbar.

Das erfindungsgemäße Verfahren ist einfach integrierbar, ohne bestehende Leittechnik des Schienenfahrzeugs grundlegend verändern zu müssen.

Das erfindungsgemäße Verfahren verwendet vorteilhaft eine sichere Datenverbindung, wie sie beispielsweise in der Beschreibung der Patentanmeldung mit dem Anmeldeaktenzeichen DE 10 2022 206 426.7, angemeldet am 27.06.2022, beschrieben ist.

Nachfolgend wird die Erfindung mit Hilfe einer Zeichnung näher erläutert. Dabei zeigt:
- FIG 1: eine prinzipielle Übersicht des erfindungsgemäßen Verfahrens,
- FIG 2: mit Bezug auf FIG 1 eine detailliertere, beispielhafte Beschreibung zur Bewegungserkennung mittels der in FIG 1 gezeigten Einheit 3.1, und
- FIG 3: mit Bezug auf FIG 1 und FIG 2 in einer Übersicht Details zur unabhängigen Abschaltung des Antriebs und zur Auslösung des Bremsvorgangs.

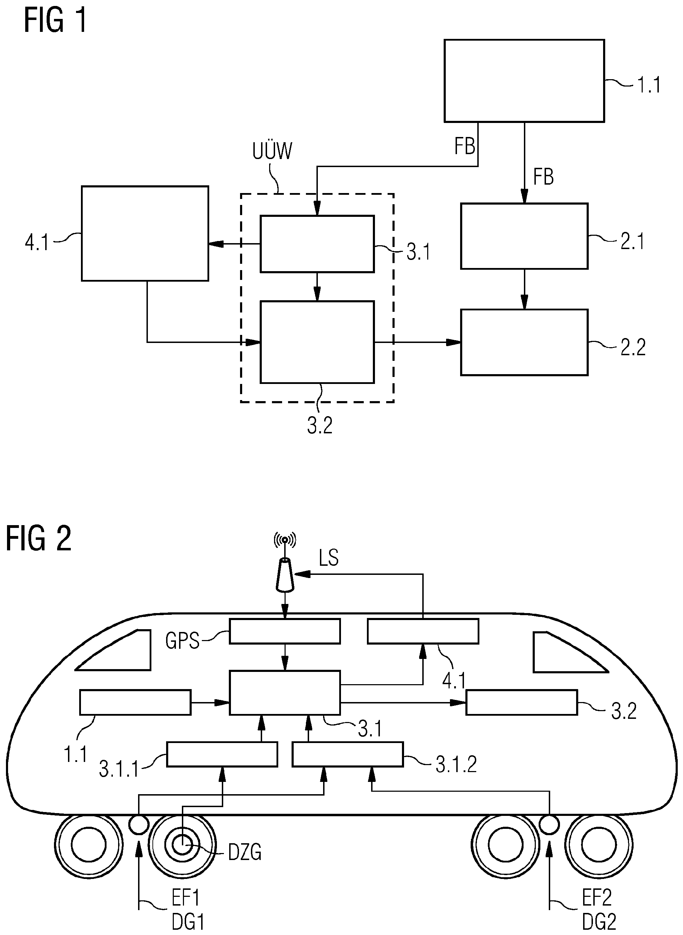

FIG 1 zeigt eine prinzipielle Übersicht des erfindungsgemäßen Verfahrens in einem Blockschaltbild.

Nachfolgend wird der Begriff "Einheit" verwendet. Dieser Begriff ist im Sinne einer Funktionalität zu verstehen, die über Baugruppen, Komponenten, etc., sichergestellt wird.

Das erfindungsgemäße Verfahren verwendet eine Befehlseinheit 1.1, mit der ein Fahrbefehl FB zum Losfahren des Schienenfahrzeugs generierbar ist.

Dabei wird ein Fehlen des Fahrbefehls FB als Fahrverbot des Schienenfahrzeugs interpretiert, das dann entsprechend stillstehen muss.

Als Befehlseinheit 1.1 wird beispielsweise eine landseitige Betriebsleitzentrale verwendet, die an das Schienenfahrzeug über eine sichere Funkverbindung bzw. mit Hilfe einer sicheren Datenübertragung den Fahrbefehl FB übermittelt.

Alternativ dazu wird eine Befehlseinheit 1.1 verwendet, die lokal auf dem Schienenfahrzeug verbaut ist und dort betrieben wird.

In einer bevorzugten Weiterbildung wird beim autonomen Betrieb des Schienenfahrzeugs unter Beteiligung der Befehlseinheit 1.1 vollautomatisch ein vorgegebener bzw. gespeicherter Fahrplan abgearbeitet, auf dem basierend ein jeweils geltender Fahrbefehl gebildet wird.

Der Fahrbefehl FB gelangt von der Befehlseinheit 1.1 an eine (reguläre, vorbekannte) Leittechnik bzw. Fahrzeugleittechnik 2.1, die den Fahrbefehl FB entsprechend ihrer Spezifikation verarbeitet und über eine Einheit 2.2 Antriebs- und Bremseinrichtungen des Schienenfahrzeugs steuert.

Parallel dazu ist eine vom Fahrbefehl FB unabhängige Überwachungsinstanz UÜW vorgesehen.

Diese ist autark ausgeführt und in der Lage, jede Bewegung, auch eine erst beginnende Bewegung, des Schienenfahrzeugs zu erkennen, die erkannte Bewegung mit dem geltenden Fahrbefehl FB zur vergleichen und im Fall einer Abweichung unabhängig von der Leittechnik (und damit unabhängig vom geltenden Fahrbefehl FB) über die Einheit 2.2 den Antrieb des Schienenfahrzeugs zu deaktivieren bzw. eine Bremsung des Schienenfahrzeugs einzuleiten.

Die unabhängige Überwachungsinstanz UÜW verwendet eine Einheit 3.1 zur Bewegungserkennung, wobei die Bewegungserkennung nachfolgend detaillierter beschrieben ist.

Die unabhängige Überwachungsinstanz UÜW verwendet eine der Einheit 3.1 nachfolgende Einheit 3.2, mit der die erkannte Bewegung mit dem geltenden Fahrbefehl FB verglichen wird.

Eine Abweichung wird durch die Einheit 3.2 als Fehler erkannt, die entsprechend über die Einheit 2.2 eine von der Leittechnik unabhängige Abschaltung des Antriebs und eine von der Leittechnik unabhängige Bremsung des Schienenfahrzeugs veranlasst.

Dies erfolgt bevorzugt dadurch, dass die Einheit 3.2 über einen direkten elektrischen Eingriff den Antrieb sperrt.

Alternativ oder ergänzend dazu wird durch direkte elektrische Eingriffe eine Hauptenergieversorgung des Schienenfahrzeugs ausgeschaltet.

Beispielsweise
- wird eine Verbindung von einem Fahrdraht zum Schienenfahrzeug unterbrochen, oder
- es wird im Schienenfahrzeug eine Verbindung zwischen einem dort angeordneten Dieselgenerator und einer internen Hauptenergieversorgung unterbrochen, oder
- es wird im Schienenfahrzeug eine Verbindung zwischen einem dort angeordneten Hauptakkumulator (Bordbatterie) und einer internen Hauptenergieversorgung unterbrochen,
- etc.

Alternativ oder ergänzend dazu erfolgt die Aktivierung einer Bremsung durch einen direkten Eingriff in eine pneumatische Hauptbremsleitung des Schienenfahrzeugs bzw. gegebenenfalls auf weitere Bremseinrichtungen.

Parallel dazu übermittelt die Einheit 3.1 zur Bewegungserkennung fortlaufend eine Information über die Bewegung bzw. über die beginnende Bewegung, bevorzugt zusammen mit einer Ortsinformation, an eine landseitige Betriebsleitzentrale 4.1.

Die Betriebsleitzentrale 4.1 verfügt optional ebenfalls über eine Möglichkeit, beim Schienenfahrzeug eine Bremsung einzuleiten, sobald eine ungerechtfertigte Bewegung des Schienenfahrzeugs erkannt wird.

Die Betriebsleitzentrale 4.1 hat dadurch die Möglichkeit, diese Informationen mit eigenen Fahrplan-Informationen zu vergleichen. Kommt sie zu dem Schluss, dass die Fahrzeugbewegung unberechtigt ist, hat sie die Möglichkeit, durch Übermittlung eines Befehls über die gleiche Datenverbindung die Einheit 3.2 zum Abschalten zu veranlassen, um das Fahrzeug zum Stillstand zu zwingen.

Diese Einflussnahme ist optional und als zusätzliche Sicherheit zu verstehen. Sie ist insbesondere dann sinnvoll, wenn kurzfristig auf der Landseite Informationen zu Fahrplänen bzw. notwendigen Fahrzeugbewegungen vorliegen, die noch nicht auf dem Fahrzeug vorhanden sind.

FIG 2 zeigt mit Bezug auf FIG 1 eine detailliertere, beispielhafte Beschreibung zur Bewegungserkennung mittels der Einheit 3.1.

Die Einheit 3.1. zur Bewegungserkennung verwendet dazu bevorzugt mehrere unabhängige Sensoren, beispielsweise einen oder mehrere Drehzahlgeber DZG, die an einer oder an mehreren Achsen des Schienenfahrzeugs angeordnet sind.

Zugehörige Messwerte gelangen an eine Einheit 3.1.1., die die Messwerte erfasst und die die Messwerte dann an die Einheit 3.1. zur Bewegungserkennung übermittelt.

Alternativ oder ergänzend dazu werden Sensoren EF1 und EF2 verwendet, mit deren Hilfe eine sich aufbauende Anzugkraft an einer oder an mehreren der Drehgestell-Achsen DG1, DG2 des Schienenfahrzeugs erfasst werden. Die zugehörigen Messwerte werden an eine Einheit 3.1.2 übermittelt, die die Messwerte sammelt und an die Einheit 3.1. überträgt.

Mit Hilfe einer satellitenbasierten Einheit GPS werden Positionsveränderungen des Schienenfahrzeugs überwacht und detektiert. Eine Änderung der Position, die sich außerhalb einer vordefinierten Positions-Toleranz bewegt, weist auf eine beginnende Bewegung des Schienenfahrzeugs hin. Auch diese Information wird an die Einheit 3.1 übertragen.

Die beschriebenen Sensoren werden dabei elektrisch unabhängig von der Fahrzeugleittechnik 2.1 betrieben.

Die Einheit 3.1 zur Bewegungserkennung ermittelt anhand der übertragenen Messwerte bzw. anhand der zugehörigen Informationen eine Bewegung bzw. eine beginnende Bewegung des Schienenfahrzeugs.

Wird aufgrund einer Abweichung zum Fahrbefehl FB eine unberechtigte Bewegung erkannt, übermittelt die Einheit 3.1 wie vorstehend beschrieben einen von der Leittechnik unabhängigen Befehl zur Abschaltung des Antriebs und einen Befehl zur Aktivierung der Bremse an die Einheit 3.2, die nachfolgend genauer beschrieben wird.

Parallel dazu übermittelt die Einheit 3.2 fortlaufend eine Information über die Bewegung zusammen mit einer Ortsinformation an die landseitige Betriebsleitzentrale 4.1 mit Hilfe einer geeigneten Funkverbindung.

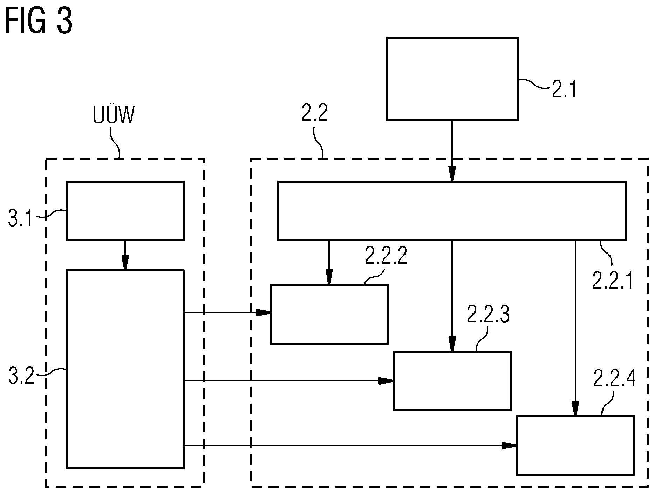

FIG 3 zeigt mit Bezug auf FIG 1 und FIG 2 in einer Übersicht Details zur unabhängigen Abschaltung des Antriebs und zur Auslösung des Bremsvorgangs.

Die Einheit 2.2 ist, wie oben beschrieben, mit der Überwachungsinstanz UÜW gekoppelt.

Die Einheit 3.2 greift elektrisch und funktional unabhängig vom Steuersystem bzw. von der Leittechnik des Schienenfahrzeugs auf die Einheit 2.2 zu.

Genauer gesagt wirkt sie direkt auf eine dem Antrieb dienende Einheit 2.2.2 und ist in der Lage, über diese in jedem Betriebsfall den Antrieb elektrisch zu sperren, so dass keine Antriebskraft mehr aufgebaut werden kann.

Weiter wirkt die Einheit 3.2 direkt auf eine dem Bremsen dienende Einheit 2.2.3 und ist in der Lage, über diese eine pneumatische Bremsung auslösen, wobei diese unabhängig von einem zugehörigen Bremssteuersystem 2.2.1 ist.

Optional ist ein Zugriff auf weitere, nicht-pneumatische Bremssysteme vorgesehen, beispielsweise wird im Bedarfsfall eine Federspeicherbremse ausgelöst.

Weiter wirkt die Einheit 3.2 direkt auf eine Hauptenergieversorgung 2.2.4 des Schienenfahrzeugs, die je nach Fahrzeugtyp eine Hochspannungseinrichtung, einen Hauptakkumulator, einen Dieselgenerator, etc., beinhaltet. Dadurch wird eine vom zugehörigen Steuersystem elektrisch unabhängige Sperrung bzw. Trennung ermöglicht.

## Patentansprüche

1. Verfahren zur Gewährleistung des Stillstands eines Schienenfahrzeugs,
- bei dem das Schienenfahrzeug autonom und ohne Einwirkung eines Triebfahrzeugführers betrieben wird,
- bei dem das Schienenfahrzeug eine Fahrzeugsteuerung mit einer elektronischen Leittechnik (2.1) verwendet, um Fahrbefehle (FB) und Stillstandbefehle im Schienenfahrzeug umzusetzen,
- bei dem die Fahrbefehle (FB) und Stillstandbefehle im Schienenfahrzeug von einer landseitigen Betriebsleitzentrale (4.1) gegeben werden,
- bei dem das Schienenfahrzeug eine von der Leittechnik (2.1) unabhängige Überwachungsinstanz (UÜW) verwendet,
- bei dem die Überwachungsinstanz (UÜW) eine Bewegung des Schienenfahrzeugs erkennt, die erkannte Bewegung mit einem geltenden Fahrbefehl (FB) der Fahrzeugsteuerung vergleicht und im Fall einer Abweichung unabhängig von der Leittechnik (2.1) eine Bremsung einleitet, um das Schienenfahrzeug zum Stillstand zu bringen,
- bei dem zur Bewegungserkennung Sensoren (EF1,EF2) verwendet werden, die an zumindest einer Achse (DG1,DG2) des Schienenfahrzeugs angeordnet sind, und bei dem die Sensoren (EF1,EF2) elektrisch unabhängig von der Fahrzeugleittechnik (2.1) betrieben werden,
**dadurch gekennzeichnet, dass**
- zur Bewegungserkennung an der Achse (DG1,DG2) des Schienenfahrzeugs ein Sensor (EF1,EF2) verwendet wird, der eine sich aufbauende Anzugkraft an einer Drehgestell-Achse (DG1,DG2) des Schienenfahrzeugs erfasst.

2. Verfahren nach Anspruch 1, bei dem im Fall der Abweichung zusätzlich ein Antrieb des Schienenfahrzeugs deaktiviert wird, wobei diese Deaktivierung ebenfalls unabhängig von der Leittechnik (2.1) erfolgt.

3. Verfahren nach Anspruch 1, bei dem die landseitige Betriebsleitzentrale (4.1) den Fahrbefehl (FB) an das Schienenfahrzeug über eine sichere Funkverbindung und/oder mit Hilfe einer sicheren Datenübertragung übermittelt.

4. Verfahren nach Anspruch 1, bei dem die Überwachungsinstanz (UÜW) bei einem Fehlen des Fahrbefehls (FB) bei gleichzeitig erkannter Bewegung des Schienenfahrzeugs den Antrieb des Schienenfahrzeugs unabhängig von der Leittechnik (2.1) deaktiviert und/oder unabhängig von der Leittechnik (2.1) die Bremsung einleitet.

5. Verfahren nach Anspruch 1, bei dem zur Durchführung des Stillstands unter Umgehung der elektronischen Leittechnik (2.1) ein direkter Eingriff in Antriebseinrichtungen und in Bremseinrichtungen des Schienenfahrzeugs erfolgt.

6. Verfahren nach Anspruch 1, bei dem zur Durchführung des Stillstands unter Umgehung der elektronischen Leittechnik (2.1) ein direkter Eingriff in eine Hauptenergieversorgung (2.2.4) des Schienenfahrzeugs erfolgt, um diese abzuschalten.

7. Verfahren nach Anspruch 1, bei dem eine Information zur erkannten Bewegung zusammen mit einer Positionsangabe des Schienenfahrzeugs an eine landseitige Betriebsleitzentrale (4.1) übertragen wird.

8. Verfahren nach Anspruch 7, bei dem die Positionsangabe satellitenbasiert am Schienenfahrzeug ermittelt wird.

9. Verfahren nach einem der vorhergehenden Ansprüche, bei dem die landseitige Betriebsleitzentrale (4.1) beim Schienenfahrzeug die Bremsung einleitet, sobald eine ungerechtfertigte Bewegung des Schienenfahrzeugs erkannt wird.

10. Verfahren nach Anspruch 1, bei dem als Sensor (EF1,EF2) ein Drehzahlgeber verwendet wird, der an einer Achse (DG1,DG2) des Schienenfahrzeugs angeordnet ist.

## Claims

1. Method for ensuring the standstill of a rail vehicle,
- in which the rail vehicle is operated autonomously and without the intervention of a train driver,
- in which the rail vehicle uses a vehicle controller having an electronic control system (2.1) in order to implement driving commands (FB) and standstill commands in the rail vehicle,
- in which the driving commands (FB) and standstill commands in the rail vehicle are issued by a landside operational control centre (4.1),
- in which the rail vehicle uses a monitoring instance (UÜW) that is independent of the control system (2.1),
- in which the monitoring instance (UÜW) detects a movement of the rail vehicle, compares the detected movement with a valid driving command (FB) of the vehicle controller and, in the event of a deviation, initiates a braking operation independently of the control system (2.1) in order to bring the rail vehicle to a standstill,
- in which sensors (EF1,EF2) arranged on at least one axle (DG1,DG2) of the rail vehicle are used for the movement detection, and in which the sensors (EF1,EF2) are operated electrically independently of the vehicle control system (2.1), **characterized in that**
- a sensor (EF1,EF2) which detects an increasing tractive force on a bogie axle (DG1,DG2) of the rail vehicle is used for the movement detection at the axle (DG1,DG2) of the rail vehicle.

2. Method according to Claim 1, in which, in the event of the deviation, a drive of the rail vehicle is additionally deactivated, wherein this deactivation is similarly performed independently of the control system (2.1).

3. Method according to Claim 1, in which the landside operational control centre (4.1) transmits the driving command (FB) to the rail vehicle via a secure radio link and/or by means of a secure data transmission.

4. Method according to Claim 1, in which, in the absence of the driving command (FB) with simultaneously detected movement of the rail vehicle, the monitoring instance (UÜW) deactivates the drive of the rail vehicle independently of the control system (2.1) and/or initiates the braking operation independently of the control system (2.1).

5. Method according to Claim 1, in which, in order to implement the standstill, a direct intervention in drive devices and in braking devices of the rail vehicle is performed, bypassing the electronic control system (2.1).

6. Method according to Claim 1, in which, in order to implement the standstill, a direct intervention in a main energy supply (2.2.4) of the rail vehicle is performed, bypassing the electronic control system (2.1), in order to shut down said main energy supply.

7. Method according to Claim 1, in which information relating to the detected movement is transmitted to a landside operational control centre (4.1) together with an indication of the position of the rail vehicle.

8. Method according to Claim 7, in which the position indication is determined in a satellite-based manner on the rail vehicle.

9. Method according to one of the preceding claims, in which the landside operational control centre (4.1) initiates the braking operation in the rail vehicle as soon as an unwarranted movement of the rail vehicle is detected.

10. Method according to Claim 1, in which a tachometer generator, which is arranged on an axle (DG1,DG2) of the rail vehicle, is used as a sensor (EF1,EF2).

## Revendications

1. Procédé pour garantir l'immobilité d'un véhicule ferroviaire,
- dans lequel le véhicule ferroviaire est mis en fonctionnement de manière autonome et sans action d'un conducteur de locomotive,
- dans lequel le véhicule ferroviaire utilise une commande de véhicule avec une technologie de direction (2.1) électronique afin de mettre en œuvre des instructions de déplacement (FB) et des instructions d'immobilité dans le véhicule ferroviaire,
- dans lequel les instructions de déplacement (FB) et les instructions d'immobilité sont données dans le véhicule ferroviaire par un poste de direction d'exploitation (4.1) côté terre,
- dans lequel le véhicule ferroviaire utilise une instance de surveillance (UÜW) indépendante de la technologie de direction (2.1),
- dans lequel l'instance de surveillance (UÜW) détecte un mouvement du véhicule ferroviaire, compare le mouvement détecté à une instruction de déplacement (FB) en vigueur de la commande de véhicule, et dans le cas d'un écart engage un freinage indépendamment de la technologie de direction (2.1) afin d'immobiliser le véhicule ferroviaire,
- dans lequel sont utilisés, pour la détection de mouvement, des capteurs (EF1, EF2) qui sont disposés sur au moins un essieu (DG1, DG2) du véhicule ferroviaire, et dans lequel les capteurs (EF1, EF2) sont mis en fonctionnement électriquement indépendamment de la technologie de direction (2.1) de véhicule, **caractérisé**
- **en ce qu'**est utilisé, pour la détection de mouvement sur l'essieu (DG1, DG2) du véhicule ferroviaire, un capteur (EF1, EF2) qui détecte une force de serrage se développant sur un essieu (DG1, DG2) de bogie du véhicule ferroviaire.

2. Procédé selon la revendication 1, dans lequel, dans le cas de l'écart, un entraînement du véhicule ferroviaire est en outre désactivé, dans lequel cette désactivation s'effectue également indépendamment de la technologie de direction (2.1).

3. Procédé selon la revendication 1, dans lequel le poste de direction d'exploitation (4.1) côté terre transmet l'instruction de déplacement (FB) au véhicule ferroviaire par l'intermédiaire d'une liaison radio sécurisée et/ou à l'aide d'un transfert de données sécurisé.

4. Procédé selon la revendication 1, dans lequel l'instance de surveillance (UÜW), lors d'une absence de l'instruction de déplacement (FB) lors d'un mouvement détecté simultanément du véhicule ferroviaire, désactive l'entraînement du véhicule ferroviaire indépendamment de la technologie de direction (2.1) et/ou engage le freinage indépendamment de la technologie de direction (2.1).

5. Procédé selon la revendication 1, dans lequel, pour la réalisation de l'immobilité sans passer par la technologie de direction (2.1) électronique, une intervention directe s'effectue dans des dispositifs d'entraînement et dans des dispositifs de freinage du véhicule ferroviaire.

6. Procédé selon la revendication 1, dans lequel, pour la réalisation de l'immobilité sans passer par la technologie de direction (2.1) électronique, une intervention directe s'effectue dans une alimentation principale en énergie (2.2.4) du véhicule ferroviaire afin d'éteindre celle-ci.

7. Procédé selon la revendication 1, dans lequel une information pour le mouvement détecté est transférée conjointement avec une spécification de position du véhicule ferroviaire à un poste de direction d'exploitation (4.1) côté terre.

8. Procédé selon la revendication 7, dans lequel la spécification de position est déterminée par satellite au niveau du véhicule ferroviaire.

9. Procédé selon l'une des revendications précédentes, dans lequel le poste de direction d'exploitation (4.1) côté terre engage le freinage dans le véhicule ferroviaire dès qu'un mouvement injustifié du véhicule ferroviaire est détecté.

10. Procédé selon la revendication 1, dans lequel est utilisé, en tant que capteur (EF1, EF2), un capteur de vitesse de rotation qui est disposé sur un essieu (DG1, DG2) du véhicule ferroviaire.
